# EUROPEAN PATENT SPECIFICATION

(11) **EP 1 563 726 B1**
(45) Date of publication and mention of the grant of the patent: **02.05.2007**
(21) Application number: 05100869.6
(22) Date of filing: 09.02.2005
(51) Int. Cl.: A01G 23/00, B30B 9/30

(54) **An arrangement and a method for processing wood**
Einrichtung und Verfahren zur Holzverarbeitung
Appareil et procédé pour le traitement du bois

(30) Priority: 13.02.2004 FI 20040070 U
(43) Date of publication of application: 17.08.2005
(73) Proprietor: Biotukki Oy, 51460 Luusniemi (FI)
(72) Inventor: Romo, Pasi, 51460, Luusniemi (FI)
(74) Representative: Kuosmanen, Timo

(56) References cited:
- WO-A-02/01939
- DE-A1- 3 630 801
- US-A- 5 638 749

## Description

### BACKGROUND OF THE INVENTION

The invention relates to a device for processing wood, the device comprising a feed chamber provided with a feed opening, at least one feed conveyor arranged to feed wood material to be processed through the feed opening to the feed chamber, at least one cutting device arranged between the feed conveyor and the feed chamber, the cutting device is arranged to cut the wood material after feeding the wood material into the feed chamber, a compression chamber provided with compression means for reducing the volume of the wood material and for forming a bundle of wood material, and transfer means for transferring the wood material from the feed chamber to the compression chamber.

The invention also relates to a compression device for reducing the volume of a bundle of wood material, the compression device comprising a compression chamber in which the wood material to be processed is arrangeable, and compression means for reducing the volume of the wood material and for forming a bundle of wood material.

The invention further relates to a method for processing wood material, the method comprising arranging wood material into a compression chamber of a compression device, and compressing the wood material with at least one compression means included in the compression device in order to reduce the volume thereof.

More attention is presently paid on the use of felling waste, i.e. branches, twigs, crowns and other wood material that can be used as fuel wood. Vehicles have been developed for collecting fuel wood, the vehicles being provided with processing equipment compressing the wood and binding the wood into easily processable elongated bundles. It is known, for example from WO-A-02/01939, to employ jaws in the compression chambers of the processing equipment between which the wood material can be compressed. However, it has been observed that the jaws do not in all situations provide adequate compression.

US-A-5 638 749 discloses a baling device including an endless compression mat. From this document, the following combination of features is known:
A compression device for reducing the volume of a bundle of wood material, the compression device comprising:
   a compression chamber (8) in which the wood material to be processed is arrangeable, and
   compression means for reducing the volume of the wood material and for forming a bundle of wood material,
wherein
the compression chamber (8) comprises at least one bendable transmission element (28), and
the bendable transmission element (28) is arranged to form a loop (34) in the compression chamber (8);

Further, the same document discloses :
A method for processing wood material, the method comprising:
   arranging wood material into a compression chamber (8) of a compression device,
   compressing the wood material with at least one compression means included in the compression device in order to reduce the volume thereof, and
   arranging the wood material inside the loop (34) formed by the bendable transmission element (28) in the compression chamber (8).

### BRIEF DESCRIPTION OF THE INVENTION

It is an object of the present invention to provide a new and improved device for baling wood material, and a compression device and a method for compressing wood material.

The processing device according to the invention is characterized in that the compression means comprise at least one bendable transmission element, that the bendable transmission element is arranged to form a loop in the compression chamber, and in that the wood material to be processed is arrangeable inside said loop and compressable into a smaller volume by reducing the size of the loop.

The compression device according to the invention is characterized in that the compression chamber comprises at least one bendable transmission element, that the bendable transmission element is arranged to form a loop in the compression chamber, and in that the wood material to be processed is arrangeable inside the loop and compressable into a smaller volume by reducing the size of the loop.

The method according to the invention is characterized by arranging the wood material inside the loop formed by the bendable transmission element in the compression chamber, and compressing the wood material into a smaller volume by reducing the size of the loop.

It is an essential idea of the invention that the compression chamber comprises at least one bendable transmission element that forms a loop around the wood material in the chamber. Reducing the size of the loop allows achieving compressed wood material.

The invention provides such an advantage that the structure of the bendable transmission element is light but still allows producing a high compressing force. In addition, the compression chamber is fairly easy to provide with the required number of the bendable transmission elements.

An essential idea of an embodiment of the invention is that the device comprises means for driving the bendable transmission element in the longitudinal direction thereof, and that the driving is arranged to rotate the bundle of wood material inside the loop about the longitudinal axis thereof during compression. To simultaneously compress and rotate the bundle of wood material effectively condenses the wood material. In addition, the binding device need not be arranged to rotate about the bundle of wood material, and therefore the structure may remain simple.

It is an essential idea of an embodiment of the invention that the bendable transmission element is a chain. The chain may for instance be a roller chain or a so-called block chain. The chain endures loads and is relatively light and the price thereof is advantageous.

It is also an essential idea of an embodiment of the invention that opposite sides of the compression chamber are provided with several clamp jaws and that at least one bendable transmission element is arranged at each clamp jaw. The clamp jaws are also provided with several idler wheels for controlling the bendable transmission element.

It is further an essential idea of an embodiment of the invention that the clamp jaws in the compression chamber are movably arranged so that they can be driven to the discharge side on one side of the processing device, and that the transfer of the clamp jaws sideways is arranged to reduce the size of the loop of the transmission element.

### BRIEF DESCRIPTION OF THE DRAWINGS

The invention will be described in greater detail in the accompanying drawings, in which
Figure 1 schematically shows a side view of a device for processing wood material according to the invention that is arranged on a movable carrier,
Figure 2 schematically shows the device for processing wood material according to the invention seen from the rear end of a vehicle,
Figures 3 to 5 schematically show in perspective the processing device according to the invention in different operational positions,
Figure 6 schematically shows an end view of the processing device according to the invention, the compression chamber thereof being opened for discharging a bundle of wood material,
Figure 7 schematically shows an end view of the processing device according to the invention and a bendable transmission element to be used therein forming a loop in the compression chamber, and
Figure 8 schematically shows an end view of the processing device according to the invention.

For clarity, the Figures show the invention in simplified form. Similar parts are indicated with the same reference numerals in the Figures.

### DETAILED DESCRIPTION OF SOME EMBODIMENTS OF THE INVENTION

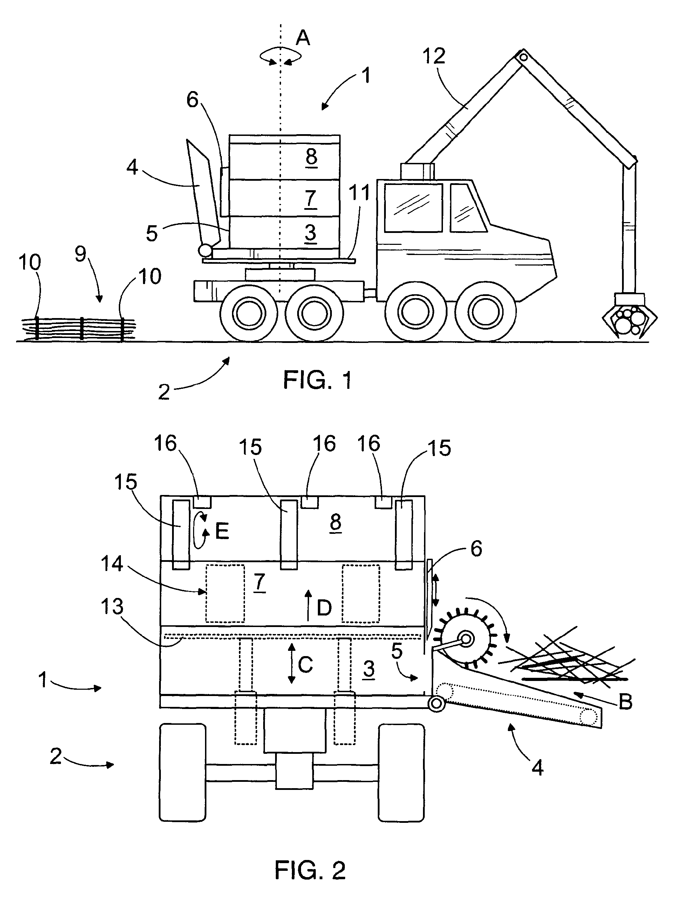

In Figure 1, a device 1 for processing wood is arranged on a movable carrier 2, which may for instance be a forest tractor or the like. The processing device 1 comprises a feed chamber 3, in which wood material, such as twigs, felling waste, small -dimensioned wood etc., can be fed by means of a feed conveyor 4. The feed chamber 3 is provided with a feed opening 5 for feeding wood material. The feed opening 5 is also provided with a cutting device 6, by which the wood material can be cut after an appropriate portion of wood is fed into the feed chamber 3. An intermediate chamber 7 is placed above the feed chamber 3 and a compression chamber 8 may be placed on top of the intermediate chamber 7. The intermediate chamber 7 can be used if necessary for temporarily storing cut wood material, if a previous portion of wood material is still being processed in the compression chamber 8. In addition, the intermediate chamber 7 can be used for collecting several portions of cut wood material to form one larger entity, before transferring them to the compression chamber 8. In the compression chamber 8 the wood material can be compressed so as to reduce the volume thereof. The compression also enables to form the wood material into a bundle 9, around which one or more binding elements 10 can be arranged, for instance a cord, a band or a net. The compression chamber 8 can be opened so as to remove the finished bundle of wood material 9 from the compression chamber 8. The bundle 9 can be dropped on the ground or on a shelf 11 in the vehicle, from where the bundle can be hoisted for instance using a crane 12.

In Figure 2 the processing device 1 is shown from the rear end of the vehicle 2. The processing device 1 is transversely turned around the joint placed on the base 2 and the feed conveyor 4 is lowered from the transport position to the service position. The feed conveyor 4 allows pushing a predetermined amount of wood material in feeding direction B to the feed chamber 3, and thereafter the wood material is cut using the cutting device 6. The operation of the cutting device 6 may, for instance, be based on a guillotine-type cutting blade, circular saw, chain saw or any chip-forming or non-chip-forming cutting element. When cutting is carried out, the feed conveyor 4 is stopped and the cut wood material is transferred from the feed chamber 3 to the intermediate chamber 7. The transfer can be carried out for instance by moving a base plate 13 of the feed chamber 3 in the vertical direction C. The intermediate chamber 7 may be provided with means 14 that receive the wood material. Such means 14 may be provided with for instance a conveyor or jaws, between which the wood material can be compressed during the temporary storage. In addition, the means 14 can be used to transfer the wood material from the intermediate chamber 7 to the compression chamber 8. The compression chamber 8 may be provided with clamp jaws 15 that allow receiving the wood material to the compression chamber 8 and that allow compressing the wood material into a smaller volume. In some cases other types of compression means can be employed instead of clamp jaws. The compression chamber 8 may also be provided with one or more binding devices 16 enabling to bind an appropriate binding element 10 around the bundle of wood material 9 in direction E.

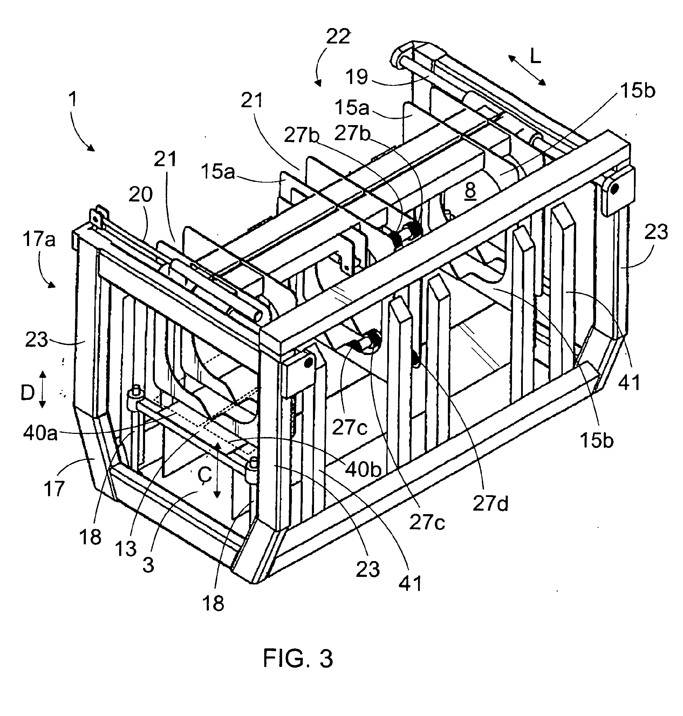

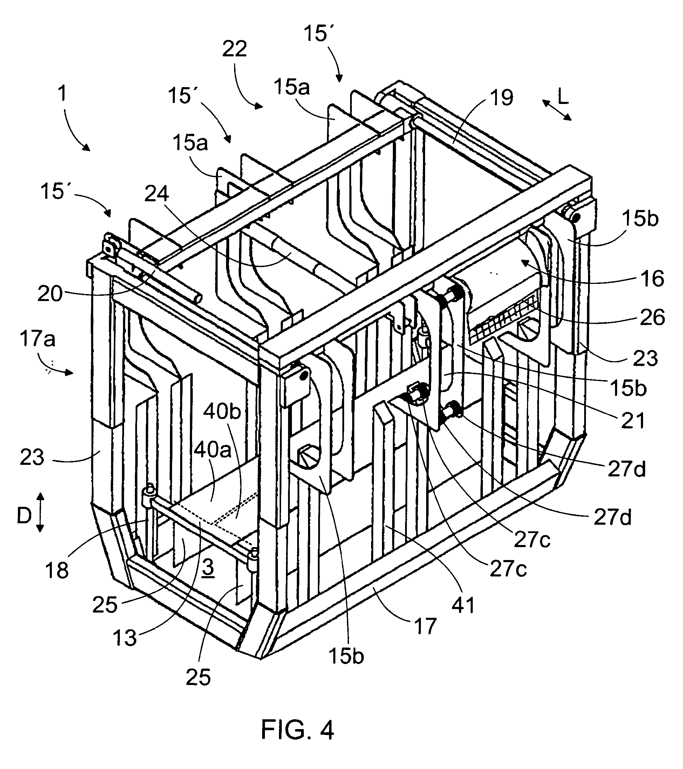

Figure 3 shows the structure of the processing device 1 in greater detail. A frame 17 of the processing device 1 may be composed of tubular beams or the like. The base plate 13 of the feed chamber 3 can be supported by vertical support elements 18 so that the base plate 13 can be moved in the vertical direction C in order to transfer the wood material from the feed chamber 3 to the intermediate chamber 7. In Figure 3 the base plate 13 is shown in the upper position thereof and the clamp jaws 15a and 15b are closed in the horizontal direction L after receiving the wood material. The wood material may be stored in the intermediate chamber 7, in which the wood material is supported by horizontally moving closing elements 40. The closing elements 40 may be plate-like or beam-like structures, which may protrude from between vertical support beams 41 restricting the intermediate chamber 7. The wood material can be stored above the closing elements, and when the amount of wood material is sufficient, the jaws 15a and 15b allow taking the material from the closing element 40 and to transfer the material to the co m-pression chamber 8. For clarity, the closing elements 40 shown in Figures 3 and 4 are heavily simplified. Furthermore, for the sake of clarity Figures 3 and 4 show only some of the closing elements 40a and 40b.

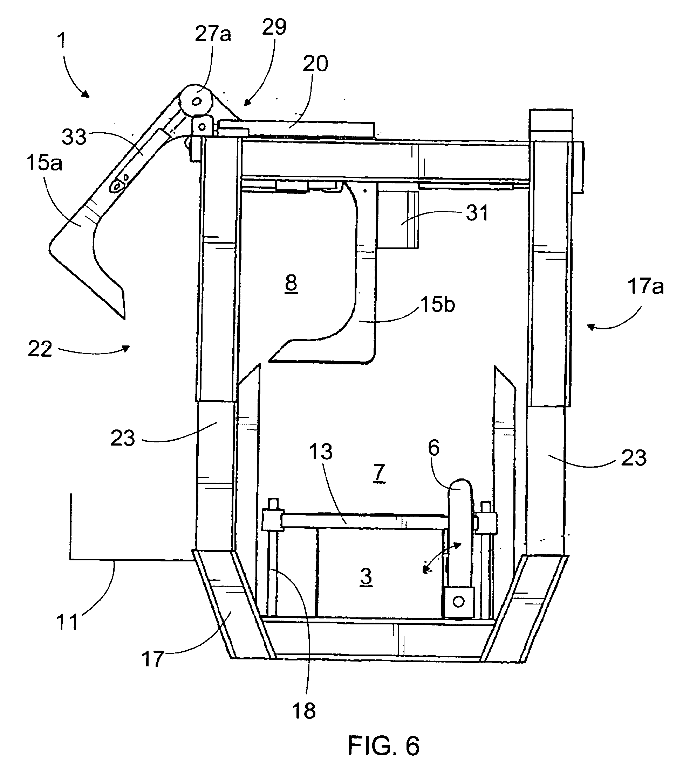

The clamp jaws 15a, 15b may be supported on linear guides 19 placed in the frame 17 and controlled thereby the jaws can be opened and closed in the horizontal direction L for instance by means of one or more cylinders 20 or another appropriate actuator. The clamp jaws 15a, 15b may form plate-like structures, in which case they remain stiff in the compression direction L, but at the same time very light. There are typically several clamp jaws 15a, 15b and they may be arranged, observed in the longitudinal direction of the device, so that two pairs of jaws 15' are always placed relatively close to one another, thus forming a kind of double jaw, between which a space 21 is formed. The jaws 15a are arranged on a discharge side 22 of the device 1 and the jaws 15b on the opposite side. The jaws 15a and 15b may be arranged to move in the part formed between the vertical support beams 41 restricting the intermediate chamber 7. Furthermore, the frame 17 may be formed in such a manner that the upper part 17a thereof can be lifted and lowered. In Figure 3 the upper part 17a of the frame is lowered to the lower position, where the clamp jaws 15a, 15b may receive the wood material from the closing elements 40. When the upper frame 17a is down, an appropriate portion of wood material can be provided between the jaws 15. When a sufficient amount of wood material is provided, the upper frame 17a is lifted upwards and the compression starts. Cut wood material formed during the compression may be temporarily stored in the space below the compression chamber 8, i.e. the intermediate chamber 7, where the wood material may be supported by the closing elements 40. The frame 17 may be provided with vertical guide surfaces 23 and one or more actuators, which allow moving the upper part 17a of the frame. The guide surfaces 23 may be composed of beams arranged within one another or they may be for instance pressure medium cylinders. For clarity, the feed conveyor 4 and the cutting device 6 are not shown in Figures 3 to 5 and in Figure 6.

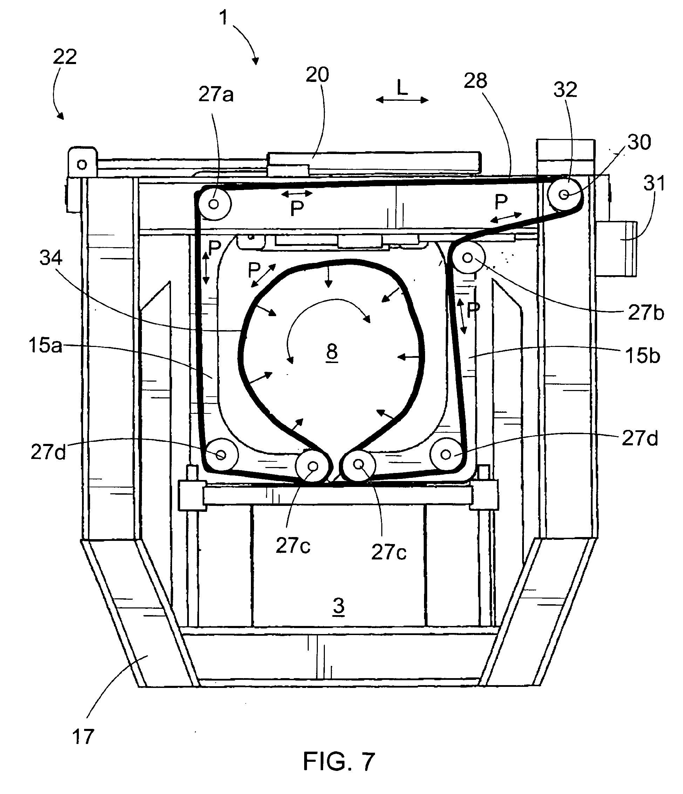

In Figure 4 the processing device 1 is shown in a situation, in which the upper part 17a of the frame is lifted into an upper position supported by the guide surfaces 23. In addition, the clamp jaws 15a, 15b are opened apart from one another in direction L. The position between the jaws 15a, 15b can be changed for instance using a hydraulic cylinder 24 or another appropriate actuator. Figure 4 also shows vertical side plates in the feed chamber 3 indicated by reference numeral 25, the plates forming a smooth surface in the feed chamber 3, thus facilitating feeding. Furthermore, a binding device 16 may be arranged between the pairs of jaws 15' that allows wrapping for instance a net 26 around the bundle of wood material 9. The space 21 between the adjacent jaws 15a and jaws 15b respectively, may be provided with idler wheels 27 for controlling the bendable transmission element 28 to be used for additionally compressing the wood material. The bendable transmission element 28 and the operational principle thereof are shown below in connection with Figure 7.

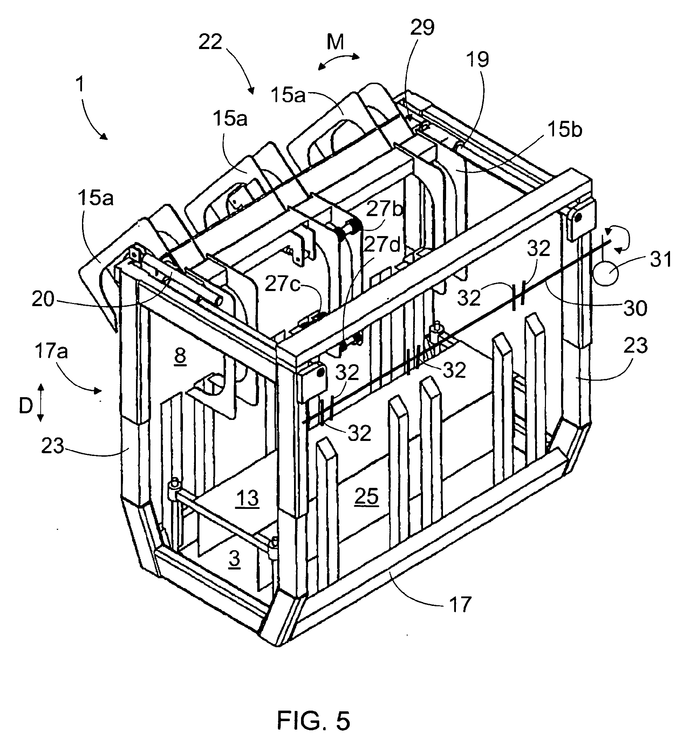

In Figure 5 the upper part 17a of the frame is still in the upper position. In addition, the clamp jaws 15a, 15b are driven to the discharge side 22 guided by the linear guides 19. Then the outermost jaws 15a can be opened in relation to a joint 29 shown in Figure 5, in which case the bundle of wood material 9 formed can be removed from the compression chamber 8. The clamp jaws 15a, 15b placed on the opposite edges of the compression chamber 8 can thus be moved apart from one another and towards one a n-other, and can further be moved as an entity to the discharge side 22 of the processing device 1 without altering the relative position between the clamp jaws 15a, 15b. Figure 5 also shows a highly simplified drive shaft 30, which can be used with one or more drive motors 31. The drive shaft 30 may be provided with several drive wheels 32 or the like, which in turn allow using the bendable transmission elements 28 in the compression chamber 8. One drive shaft 30 may therefore be arranged to use several elements intended to be used for the additional compression. Alternatively each bendable transmission element 28 can be employed with a specific actuator.

In Figure 6 the clamp jaws 15a, 15b are driven to the discharge side 22 of the processing device 1. In addition the outermost jaws 15a are opened in direction M in relation to the joint 29 in the upper part thereof. The clamp jaws 15a, 15b can be moved in direction L, for instance by means of the hydraulic cylinder 20. The outermost jaws 15a can be turned in direction M, for instance, by means of a hydraulic motor or a hydraulic cylinder, which are not shown in the Figure for the sake of clarity. The bundle of wood material 9 to be removed from the compression chamber 8 can be dropped on the shelf 11. Furthermore the opening jaw 15a can be provided with an idler wheel 27a, which can be moved by means of an actuator 33, such as a hydraulic cylinder. The movable idler wheel 27a may move and thus give way, if sudden oversized loads are placed upon the bendable transmission element 28, or if the cross section of the bundle of wood material 9 includes variation, as observed in the longitudinal direction, and different loads are therefore placed upon different transmission elements 28. For clarity, other idler wheels 27 are not shown in Figure 6. Figure 6 also shows the cutting device 6, which may for instance be a chain saw that can be turned as shown in the Figure. Alternatively the cutting device 6 is movable in the linear direction.

Figure 7 shows the compression chamber 8 and the clamp jaws 15a, 15b included therein, the bendable transmission element 28 and also the means for using the bendable transmission element 28. The bendable transmission element 28 may for instance be a chain, a wire rope, a rope, a belt or a thin metal band. The bendable transmission element 28 is arranged to form a loop 34 in the compression chamber 8. The wood material to be processed is arranged inside the loop 34. The size of the loop 34 can be reduced, thus compressing the wood material inside the loop 34. In this way the loop 34 can be used to further compress the wood material pre-compressed by the jaws 15a, 15b. The bendable transmission element 28 may be supported on both the jaws 15a, 15b by several idler wheels 27a to 27d or the like. The upper parts of the jaws 15a, 15b may be provided with idler wheels 27a and 27b, and furthermore the tip of the jaws may be provided with idler wheels 27c. In addition, the jaws 15a, 15b may be provided with at least idler wheels 27d, whereby the bendable transmission element 28 may be arranged to move on the side of the rear surface of the jaws 15a, 15b. The structure of the idler wheels 27 can be arranged, for example, in accordance with the structure of the transmission element 28. When a chain is used, the idler wheel is a chain wheel, and when a belt is used the idler wheel is a belt roller etc. Furthermore the positioning and number of the idler wheels 27 can be selected for instance in accordance with the structure and dimensions of the jaws 15. The idler wheels 27 can be arranged in a space 21 between the jaws belonging to the pair of jaws 15'. It is also possible to provide the space between the pair of jaws 15' with two bendable transmission elements 28 and idler wheels 27 for using them. The use of several transmission elements 28 means that individual transmission elements 28 need not be dimensioned to be very supporting, and therefore the structure thereof may be lighter and more advantageous as regards costs.

Tightening the loop 34 formed by the bendable transmission element 28 can be carried out by moving the jaws in direction L towards the discharge side 22 of the device 1. Since the idler wheels 27a to 27d are connected to the jaws 15, the wheels are transferred together with the jaws 15 to the discharge side 22. Then again, the drive wheel 32 is supported on the frame 17, and does not move with the jaws 15. Then the movement of the jaws 15 causes the distance of the idler wheels 27a to 27d to the drive wheel 32 to increase, whereby the size of the loop 34 simultaneously is reduced in relation to the transfer of the jaws 15. The additional compression can therefore be carried out simultaneously as the jaws 15 are transferred towards the discharge side 22 for removing the bundle of wood material 9. However, it should be noted that altering the size of the loop 34 may in some cases be arranged to be carried out in another way, for instance by moving one or more of the idler wheels 27 separately.

Furthermore, the device 1 may comprise means for driving the bendable transmission element 28 in the longitudinal direction P thereof. These means may include one or more drive motors 31 that allow employing the drive wheel 32. As shown in Figure 5 the drive wheels 32 in each bendable transmission element 28 may be connected to one common drive shaft 30, whereby no separate actuator is required for each transmission element 28. Driving the bendable transmission element 28 formed as a closed loop in the longitudinal direction P at the same time as it is tightly secured around the bundle of wood material 9, the bundle of wood material 9 is made to rotate about the longitudinal axis thereof in the compression chamber 8. The rotation intensifies the compression. In addition, when the bundle of wood material 9 is being rotated, one or more binding elements 10 can be directed from the binding device 16 around the bundle of wood material 9. The binding device 16 is shown for instance in Figure 4. On account of this solution the binding device 16 need not be rotated around the bundle of wood material 9, which simplifies the structure of the compression chamber 8. In some cases each bendable transmission element 28 can be driven with a specific drive motor. The drive motor 31 may be arranged in connection with the clamp jaw 15b as shown in Figure 6.

Instead of the linearly mobile clamp jaws 15a, 15b shown in the Figures, jaws can be used which are arranged to turn around the horizontal joint. The idler wheels 27 are then arranged in accordance with the structure and working mechanism of the jaws. It is also possible that the compression chamber is not provided with clamp jaws or that it is provided with jaws that do not contribute to the compression of the wood material. Thus, the wood material is compressed only by means of a bendable transmission element.

In some cases the intermediate chamber 7 is not required; instead the wood material is transferred directly from the feed chamber 3 to the compression chamber 8.

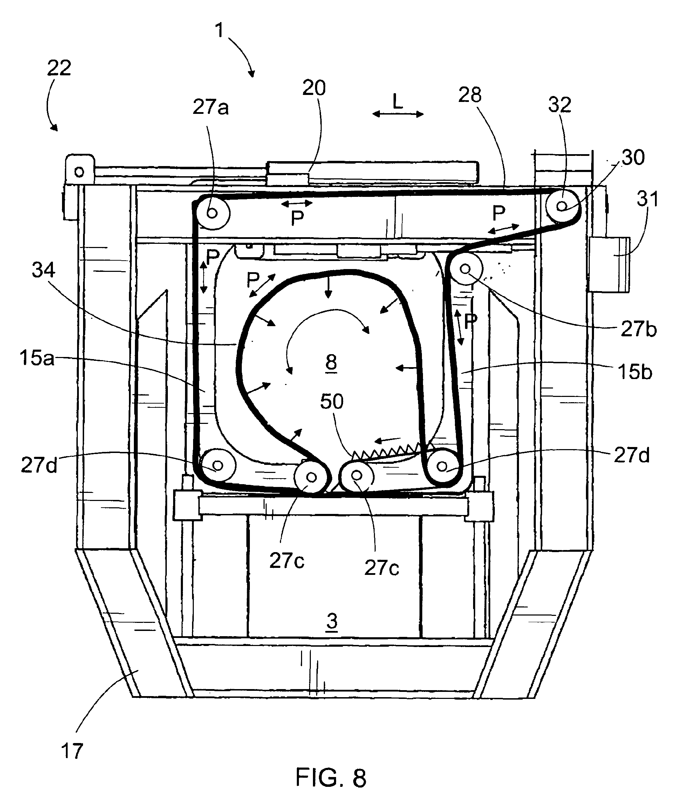

Figure 8 shows a further solution, in which the bendable transmission element 28 does not move through the idler wheel 27c placed at the tip of the jaw 15b, but deviating from Figure 7 is directed through the idler wheel 27d. The jaw 17b is also provided with a second bendable transmission element 50 between the idler wheels 27c and 27d, which second transmission element can be driven in the direction shown by the arrow. The second bendable transmission element 50 enables to achieve additional compression of the wood material. It is also possible to provide the jaw 15a with a third bendable transmission element 50 as shown in the Figure in respect of the jaw 15b. On account of the second and the third bendable transmission element, the forces required in compression are smaller. The bendable transmission element 28 may form an open loop in the compression chamber 8, and one or more bendable additional transmission elements 50 may supplement the loop to be of a more closed form. The second and the third bendable transmission element 50 may be provided with teeth or similar elements in order to increase friction and to improve the handling capacity.

The drawings and the specification associated therewith are merely intended to illustrate the idea of the invention. The details of the inve n-tion may vary within the scope of the claims.

## Claims

1. A device for processing wood, the device comprising:
a feed chamber (3) provided with a feed opening (5);
at least one feed conveyor (4) arranged to feed wood material to be processed through the feed opening (5) to the feed chamber (3);
at least one cutting device (6) arranged between the feed conveyor (4) and the feed chamber (3), and the cutting device is arranged to cut the wood material after feeding the wood material into the feed chamber (3);
a compression chamber (8) provided with compression means for reducing the volume of the wood material and for forming a bundle of wood material (9), and
transfer means for transferring the wood material from the feed chamber (3) to the compression chamber (8),
wherein
the compression means comprise at least one bendable transmission element (28),
the bendable transmission element (28) is arranged to form a loop (34) in the compression chamber (8), and
the wood material to be processed is arrangeable inside said loop (34) and compressable into a smaller volume by reducing the size of the loop (34).

2. A processing device as claimed in claim 1, **characterized in that**
the device (1) comprises means for driving the bendable transmission element (28) in at least one direction in the longitudinal direction (P) of the transmission element, whereby driving the bendable transmission element (28) is arranged to cause the loop (34) and the bundle of wood material (9) to rotate about the longitudinal axis thereof in the compression chamber (8).

3. A processing device as claimed in claim 1 or 2, **character-ized in**
**that** the compression chamber (8) is provided with at least two clamp jaws (15a, 15b) arranged on opposite sides thereof,
**that** the clamp jaws (15a, 15b) are provided with several idler wheels (27a to 27d), and
**that** the bendable transmission element (28) is arranged at the clamp jaws (15a, 15b) and to be supported by the idler wheels (27a to 27d).

4. A processing device as claimed in claim 3, **characterized in**
**that** the clamp jaws (15a, 15b) are movably arranged in the sideward direction of the device (1),
**that** the movement of the clamp jaws (15a, 15b) in the sideward direction is arranged to reduce the size of the loop (34).

5. A compression device for reducing the volume of a bundle of wood material, the compression device comprising:
a compression chamber (8) in which the wood material to be processed is arrangeable, and
compression means for reducing the volume of the wood material and for forming a bundle of wood material,
wherein
the compression chamber (8) comprises at least one bendable transmission element (28),
the bendable transmission element (28) is arranged to form a loop (34) in the compression chamber (8), and
the wood material to be processed is arrangeable inside said loop (34) and compressable into a smaller volume by reducing the size of the loop (34).

6. A compression device as claimed in claim 5, **characterized in that** the device (1) comprises means for driving the bendable transmission element (28) in at least one direction in the longitudinal direction (P) of the transmission element, whereby driving the transmission element is arranged to cause the loop (34) and the bundle of wood material (9) to rotate about the longitudinal axis thereof in the compression chamber (8).

7. A method for processing wood material, the method comprising:
arranging wood material into a compression chamber (8) of a compression device,
compressing the wood material with at least one compression means included in the compression device in order to reduce the volume thereof,
arranging the wood material inside the loop (34) formed by the bendable transmission element (28) in the compression chamber (8), and
compressing the wood material into a smaller volume by reducing the size of the loop (34).

8. A method as claimed in claim 7, **characterized by**
driving the bendable transmission element (28) in at least one direction in the longitudinal direction (P) thereof, whereby the bundle of wood material (9) rotates about the longitudinal axis thereof in the compression chamber (8).

## Patentansprüche

1. Holzverarbeitungsvorrichtung, wobei die Vorrichtung umfasst:
eine Zufuhrkammer (3), die mit einer Zufuhröffnung (5) ausgestattet ist;
mindestens ein Zufuhrförderband (4), das angeordnet ist, um zu verarbeitendes Holzmaterial durch die Zufuhröffnung (5) der Zufuhrkammer (3) zuzuführen;
mindestens eine Schneidevorrichtung (6), die zwischen dem Zufuhrförderband (4) und der Zufuhrkammer (3) angeordnet ist, und die Schneidevorrichtung angeordnet ist, um das Holzmaterial nach Zuführen des Holzmaterials in die Zufuhrkammer (3) zu schneiden;
eine Kompressionskammer (8), die mit einem Kompressionsmittel zum Verringern des Volumens des Holzmaterials und zum Bilden eines Bündels aus Holzmaterial (9) ausgestattet ist, und
Transfermittel zum Transferieren des Holzmaterials von der Zufuhrkammer (3) zu der Kompressionskammer (8),
wobei das Kompressionsmittel mindestens ein biegsames Übertragungselement (28) umfasst,
das biegsame Übertragungselement (28) angeordnet ist, um eine Schleife (34) in der Kompressionskammer (8) zu bilden, und
das zu verarbeitende Holzmaterial in der Schleife (34) angeordnet werden kann und in ein kleineres Volumen durch Verringern der Größe der Schleife (34) komprimierbar ist.

2. Verarbeitungsvorrichtung gemäß Anspruch 1, **dadurch gekennzeichnet, dass**
die Vorrichtung (1) Mittel zum Treiben des biegsamen Übertragungselements (28) in mindestens einer Richtung in der longitudinalen Richtung (P) des Übertragungselements umfasst, wodurch das Treiben des biegsamen Übertragungselements (28) angeordnet ist, um zu veranlassen, dass sich die Schleife (34) und das Bündel aus Holzmaterial (9) um die longitudinale Achse davon in der Kompressionskammer (8) drehen.

3. Verarbeitungsvorrichtung gemäß Anspruch 1 oder 2, **dadurch gekennzeichnet,**
**dass** die Kompressionskammer (8) mit mindestens zwei Spannbacken (15a, 15b) ausgestattet ist, die an gegenüberliegenden Seiten davon angeordnet sind,
**dass** die Spannbacken (15a, 15b) mit mehreren Zwischenrädern (27a bis 27d) ausgestattet sind, und
**dass** das biegsame Übertragungselement (28) an den Spannbacken (15a, 15b) angeordnet ist und durch die Zwischenräder (27a bis 27d) zu tragen ist.

4. Verarbeitungsvorrichtung gemäß Anspruch 3, **dadurch gekennzeichnet,**
**dass** die Spannbacken (15a, 15b) bewegbar in der Seitwärtsrichtung der Vorrichtung (1) angeordnet sind,
**dass** die Bewegung der Spannbacken (15a, 15b) in der Seitwärtsrichtung angeordnet ist, um die Größe der Schleife (34) zu verringern.

5. Kompressionsvorrichtung zum Verringern des Volumens eines Bündels aus Holzmaterial, wobei die Kompressionsvorrichtung umfasst:
eine Kompressionskammer (8), in der das zu verarbeitende Holzmaterial angeordnet werden kann, und
Kompressionsmittel zum Verringern des Volumens des Holzmaterials und zum Bilden eines Bündels aus Holzmaterial,
wobei die Kompressionskammer (8) mindestens ein biegsames Übertragungselement (28) umfasst,
das biegsame Übertragungselement (28) angeordnet ist, um eine Schleife (34) in der Kompressionskammer (8) zu bilden, und
das zu verarbeitende Holzmaterial in der Schleife (34) angeordnet werden kann und in ein kleineres Volumen durch Verringern der Größe der Schleife (34) komprimierbar ist.

6. Kompressionsvorrichtung gemäß Anspruch 5, **dadurch gekennzeichnet, dass** die Vorrichtung (1) Mittel zum Treiben des biegsamen Übertragungselements (28) in mindestens einer Richtung in der longitudinalen Richtung (P) des Übertragungselements umfasst, wodurch das Treiben des Übertragungselements angeordnet ist, um zu veranlassen, dass sich die Schleife (34) und das Bündel aus Holzmaterial (9) um die longitudinale Achse davon in der Kompressionskammer (8) drehen.

7. Verfahren zur Holzmaterialverarbeitung, wobei das Verfahren umfasst:
Anordnen von Holzmaterial in einer Kompressionskammer (8) einer Kompressionsvorrichtung,
Komprimieren des Holzmaterials mit mindestens einem Kompressionsmittel, das in der Kompressionsvorrichtung enthalten ist, um das Volumen davon zu verringern,
Anordnen des Holzmaterials in der Schleife (34), die durch das biegsame Übertragungselement (28) in der Kompressionskammer (8) gebildet wird, und
Komprimieren des Holzmaterials in ein kleineres Volumen durch Verringern der Größe der Schleife (34).

8. Verfahren gemäß Anspruch 7, **gekennzeichnet durch**
Treiben des biegsamen Übertragungselements (28) in mindestens einer Richtung in der longitudinalen Richtung (P) davon, wodurch sich das Bündel aus Holzmaterial (9) um die longitudinale Achse davon in der Kompressionskammer (8) dreht.

## Revendications

1. Dispositif pour traiter du bois, le dispositif comprenant :
➢ une chambre d'alimentation (3) pourvue d'une ouverture d'alimentation (5) ;
➢ au moins un transporteur d'alimentation (4) arrangé pour transmettre la matière bois qui doit être traitée à travers l'ouverture d'alimentation (5) à la chambre d'alimentation (3) ;
➢ au moins un dispositif de coupe (6) disposé entre le transporteur d'alimentation (4) et la chambre d'alimentation (3), et le dispositif de coupe est arrangé pour couper la matière bois après l'alimentation de la matière bois dans la chambre d'alimentation (3) ;
➢ une chambre de compression (8) pourvue d'un moyen de compression pour réduire le volume de la matière bois et pour former un fagot de la matière bois (9), et
➢ un moyen de transfert pour transférer la matière bois de la chambre d'alimentation (3) à la chambre de compression (8),
dans lequel
➢ le moyen de compression comprend au moins un élément de transmission pliable (28),
➢ l'élément de transmission pliable (28) est arrangé pour former une boucle (34) dans la chambre de compression (8), et
➢ la matière bois qui doit être traitée, peut être disposée à l'intérieur de ladite boucle (34) et peut être comprimée en un volume plus petit en réduisant la taille de la boucle (34).

2. Dispositif de traitement comme revendiqué dans la revendication 1, **caractérisé en ce que** le dispositif (1) comprend un moyen pour entraîner l'élément de transmission pliable (28) dans au moins une direction dans la direction longitudinale (P) de l'élément de transmission de sorte que l'entraînement de l'élément de transmission pliable (28) est arrangé pour faire que la boucle (34) et le fagot de la matière bois (9) tournent autour de l'axe longitudinal de celui-là dans la chambre de compression (8).

3. Dispositif de traitement comme revendiqué dans la revendication 1 ou 2, **caractérisé en**
➢ ce que la chambre de compression (8) est pourvue d'au moins deux mâchoires de prise (15a, 15b) disposées sur les côtés opposés de celle-là,
➢ ce que les mâchoires de prise (15a, 15b) sont pourvues de plusieurs roues intermédiaires (27a à 27d), et
➢ ce que l'élément de transmission pliable (28) est disposé aux mâchoires de prise (15a, 15b) et pour être supporté par les roues intermédiaires (27a à 27d).

4. Dispositif de traitement comme revendiqué dans la revendication 3, **caractérisé en**
➢ ce que les mâchoires de prise (15a, 15b) sont disposées de manière mobile dans la direction de côté du dispositif (1),
➢ ce que le mouvement des mâchoires de prise (15a, 15b) dans la direction de côté est arrangé pour réduire la taille de la boucle (34).

5. Dispositif de compression pour réduire le volume d'un fagot de la matière bois, le dispositif de compression comprenant :
➢ une chambre de compression (8) dans laquelle la matière bois qui doit être traitée, peut être disposée, et
➢ un moyen de compression pour réduire le volume de la matière bois et pour former un fagot de la matière bois,
dans lequel
➢ la chambre de compression (8) comprend au moins un élément de transmission pliable (28),
➢ l'élément de transmission pliable (28) est arrangé pour former une boucle (34) dans la chambre de compression (8), et
➢ la matière bois qui doit être traitée, peut être disposée à l'intérieur de ladite boucle (34) et peut être comprimée en un volume plus petit en réduisant la taille de la boucle (34).

6. Dispositif de compression comme revendiqué dans la revendication 5, **caractérisé en ce que** le dispositif (1) comprend un moyen pour entraîner l'élément de transmission pliable (28) dans au moins une direction dans la direction longitudinale (P) de l'élément de transmission de sorte l'entraînement de l'élément de transmission est arrangé pour faire que la boucle (34) et le fagot de la matière bois (9) tournent autour de l'axe longitudinal de celui-là dans la chambre de compression (8).

7. Procédé pour traiter une matière bois, le procédé comprenant les étapes consistant à :
➢ disposer la matière bois dans une chambre de compression (8) d'un dispositif de compression,
➢ comprimer la matière bois avec au moins un moyen de compression inclus dans le dispositif de compression afin de réduire le volume de celle-là,
➢ disposer la matière bois dans la boucle (34) formée par l'élément de transmission pliable (28) dans la chambre de compression (8), et
➢ comprimer la matière bois en un volume plus petit en réduisant la taille de la boucle (34).

8. Procédé comme revendiqué dans la revendication 7, **caractérisé par** l'entraînement de l'élément de transmission pliable (28) dans au moins une direction dans la direction longitudinale (P) de celui-là de sorte que le fagot de la matière bois (9) tourne autour de l'axe longitudinal de celui-là dans la chambre de compression (8).
